# EUROPEAN PATENT APPLICATION

(11) **EP 2 456 049 A1**
(43) Date of publication of application: **23.05.2012**
(21) Application number: 10461534.9
(22) Date of filing: 23.11.2010
(51) Int. Cl.: H02K 3/51

(54) **Arrangement of a conductive stalk connected to a conductive plate and method for disassembling same**

(71) Applicant: Alstom Technology Ltd, 5400 Baden (CH)
(72) Inventor: Jedlinski, Marek, 53-650 Wroclaw (PL); Wiebe, Markus, 4054, Basel (CH); Przybos, Pawel, 38-505, Bukowsko (PL); Vetterli, Stefan, 5600, Lenzburg (CH)

(57) **Abstract**

An arrangement of a conductive stalk (1) connected to a conductive plate (2) is disclosed. The conductive plate (2) has a seat (25) into which the stalk (1) is inserted and blocked. The connection comprises a lower press plate (27) resting on a support (28) having a fixed position to the stalk (1) and laterally connectable to it. The lower press plate (27) covers a portion of the conductive plate (2) and a portion of the seat (25). In addition a centering ring (30) is provided, inserted into the seat (25) between the stalk (1) and the conductive plate (2) and an upper press plate (35) covering at least a portion of the conductive plate (2) and at least a portion of the seat (25).

## Description

### TECHNICAL FIELD

The present invention relates to an arrangement of a conductive stalk connected to a conductive plate and a method for disassembling same.

In particular the arrangement is used in rotating electric machines, such as large electric generators or motors, for example for the connection of a radial stalk conveying electric power from a conductive lead (in turn connected to an exciter for example via slip rings) to the field windings.

For sake of clarity only reference to an electric generator will be made in the following.

### BACKGROUND OF THE INVENTION

Electric generators are known to comprise a stator with a rotor supported by a rotor shaft. A casing is also provided, that houses the stator and rotor; the rotor shaft comes out from the casing at the two opposite generator's ends.

The rotor shaft is often (according to the generator's design) provided with slip rings that collect DC power from an exciter to supply it to the field windings of the rotor. In this respect, since the slip rings are located outside of the casing, whereas the field windings are located inside of it, the slip rings are connected to radial stalks, that are in turn connected to an end of a conductive lead housed in an axial cavity of the rotor shaft. This cavity (and also the conductive lead housed therein) extends between a rotor shaft portion below the slip rings, up to a rotor shaft portion close to the field windings. An end of the conductive lead close to the field windings is connected to radial stalks that have a portion radially projecting from the rotor shaft and connected to conductive plates in turn connected to the field windings.

In order to realise the connection, the radial stalks carry a support and the conductive plates have a hole housing the radial stalks with their borders resting on the support; thus the connection is blocked with a nut.

When for example for maintenance or control operations the radial stalks have to be removed, also the nuts and then the conductive plates must be removed.

In particular, in order to remove the conductive plates, the windings directly connected to them must also be removed from the rotor slot.

Therefore, in some cases maintenance operation may be very time consuming and, since they may require long outages of the electric machine, also very expensive.

### SUMMARY OF THE INVENTION

The technical aim of the present invention therefore includes providing an arrangement and a method addressing the aforementioned problems of the known art.

Within the scope of this technical aim, an aspect of the invention is to provide an arrangement and a method permitting a quick extraction of the radial stalks, such that outages and, thus, costs connected to maintenance operations requiring their removal are low.

The technical aim, together with these and further aspects, are attained according to the invention by providing an arrangement and a method in accordance with the accompanying claims.

### BRIEF DESCRIPTION OF THE DRAWINGS

Further characteristics and advantages of the invention will be more apparent from the description of a preferred but non-exclusive embodiment of the arrangement and method illustrated by way of non-limiting example in the accompanying drawings, in which:
Figure 1 is a schematic longitudinal cross section of a portion of a generator;

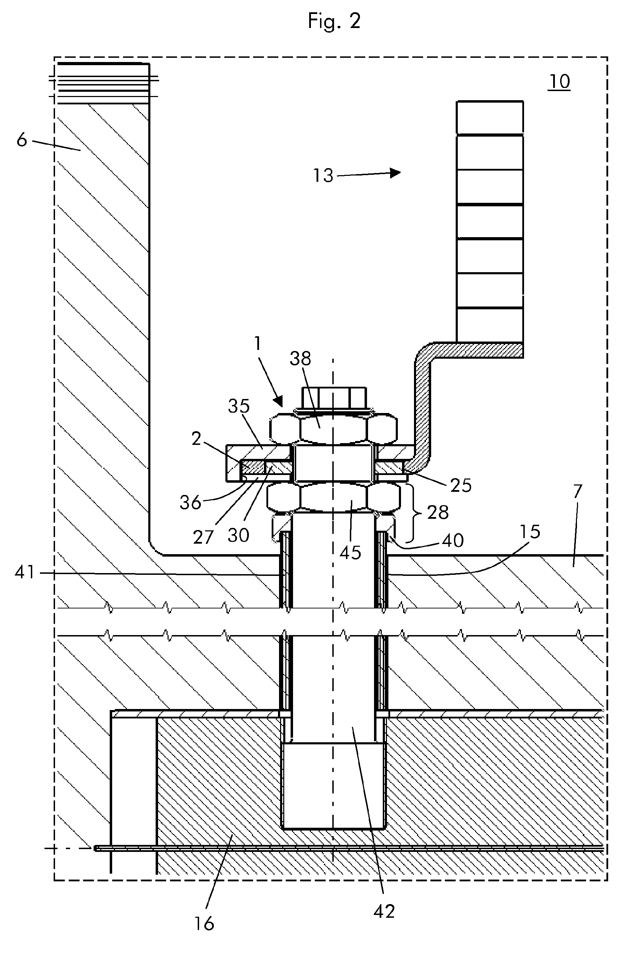

Figure 2 is a schematic longitudinal cross section of a rotor shaft in correspondence of a radial stalk connected to the field windings;

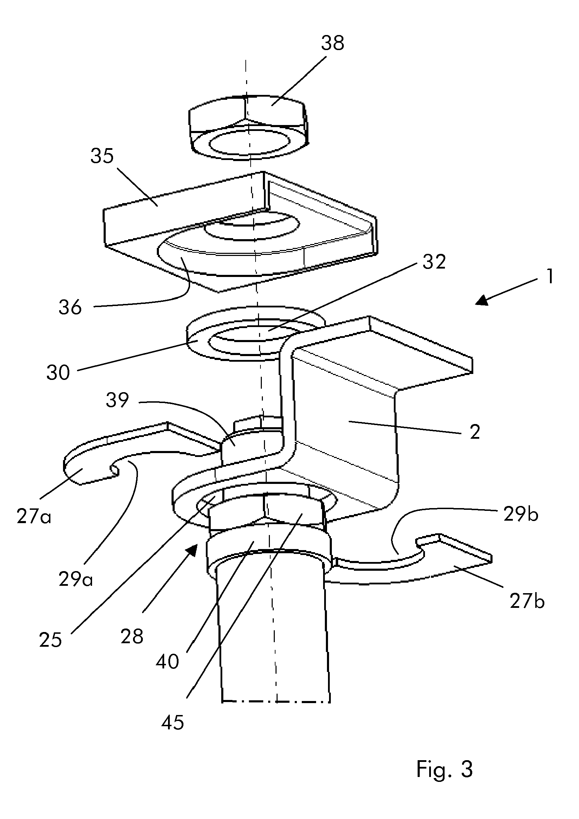

Figure 3 is an exploded view of an arrangement in an embodiment of the invention; and
Figures 4 through 7 shows the steps of the method for disassembling the arrangement.

### DETAILED DESCRIPTION OF EMBODIMENTS OF THE INVENTION

With reference to the figures, these show an arrangement of a conductive stalk 1 connected to a conductive plate 2.

In the following particular reference to an electric connection between a radial stalk projecting from a rotor shaft and connected to the end windings of a rotating electric machine such as a generator is made, it is anyhow clear that this connection may also be used for different components.

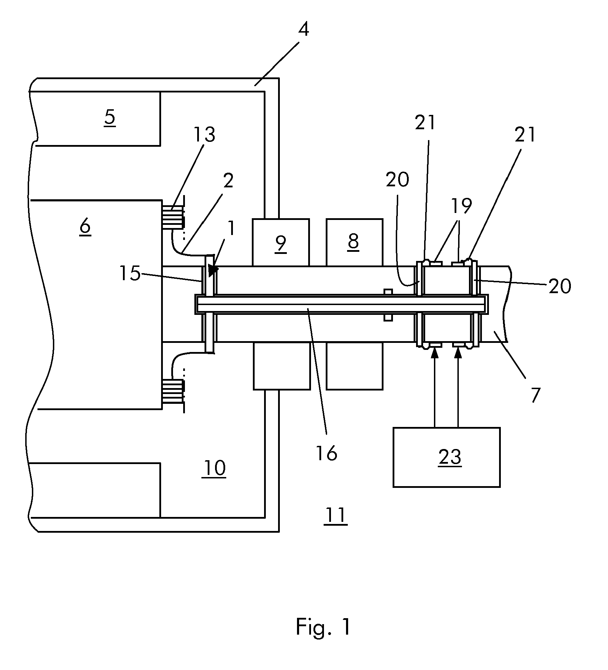

Figure 1 schematically shows an electric generator having a casing 4 that houses a stator 5 and a rotor 6 having a rotor shaft 7 supported by bearings 8.

Between the casing 4 and rotor shaft 7 seal rings 9 are provided that seal the casing inside 10 against the outer environment 11.

The rotor 6 has field windings 13 that are fed with DC power in order to generate a rotating electro magnetic field that induces electric power into the armature of the stator 5.

In order to supply DC power to the field windings 13, the field windings 13 are directly connected to the conductive plates 2 that are in turn connected to ends of the radial stalks 1; the stalks 1 are housed in bores 15 of the rotor shaft 7 and have the opposite end connected to a conductive lead 16.

The conductive lead 16 is known to comprise two elements with an insulation inbetween; it extends over a large part of the rotor shaft length up to a portion outside of the casing 4, where slip rings 19 are provided.

The connection between the conductive lead 16 and the slip rings 19 is realised via radial stalks 20 and conductive plated 21 housed in bores of the rotor shaft 7. The slip rings 19 are then connected to an exciter 23 that supplies them with DC power.

In the following the connection between the radial stalk 1 and the conductive plate 2 is in particular described; it is anyhow clear that the same connection may be provided between the radial stalk 20 and the conductive plate 21 or also other different connections within the rotating electric machine.

The conductive plate 2 is made of a plurality of thin lamellas (thickness of each lamella between 0.5-1 millimetre) that are placed one onto the other and connected together.

The conductive plate 2 has a seat 25 into which the stalk 1 is inserted and blocked; in the embodiment shown and described the seat 25 is a hole.

The hole 25 is large and, in particular, it is larger than the outer diameter of the radial stalk 1 such that a gap between them is defined.

In order to connect the radial stalk 1 to the conductive plate 2, a lower press plate 27 resting on a support 28 that has a fixed position to the stalk 1 is provided.

The lower press plate 27 is laterally connectable to the stalk 1 and, for example, it may comprise side-by-side plates 27a, 27b with recesses 29a, 29b provided at their borders for receiving the stalk 1.

The lower press plate 27 covers a portion of the conductive plate 2 (in particular its border delimiting the hole 25) and a portion of the hole 25.

Within the hole 25 a centering ring 30 is inserted, in a position between the stalk 1 and the conductive plate 2.

An upper press plate 35 is then provided; the upper press plate 35 covers a portion of the conductive plate 2 (in particular the border of the conductive plate 2 delimiting the hole 25) and a portion of the hole 25.

Preferably, the upper press plate 35 comprises a seat 36 housing the portion of the conductive plate 2 and the lower press plate 27; this seat 36 of the upper press plate 35 is a recessed seat provided at a surface of the upper press plate 35 facing the conductive plate 2.

Then a blocking element 38 tightening the connection is provided; the blocking element 38 is a nut screwed into a threaded part 39 of the stalk 1.

The support 28 comprises a support ring 40 put on the stalk 1 and resting on an insulating tube 41 also put on the stalk 1; the position of the insulating tube 41 is fixed, since it has an end resting against the conductive lead 16 that fixes its position. Typically the stalk 1 has its end 42 opposite the end connected to the conductive plate 2 that is screwed into a threaded seat of the conductive lead 16.

In addition, a nut 45 between the support ring 40 and the lower press plate 27 is provided; this nut 45 allows the group of support ring 40 and insulating tube 41 be tightened together and constitutes a support for the lower press plate 27.

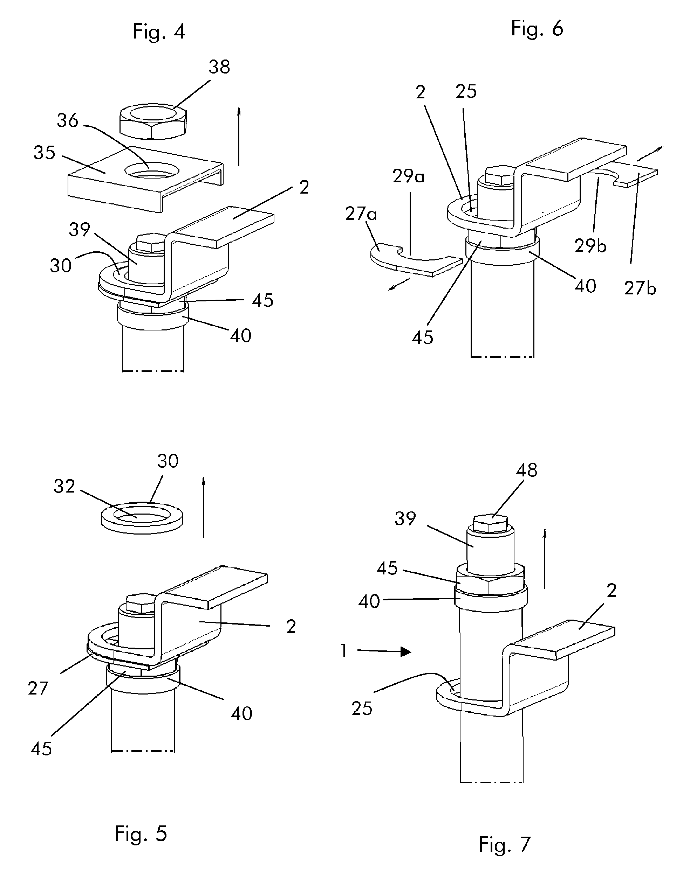

Assembling and disassembling of the arrangement is evident from what described and illustrated and is substantially the following (with reference to figures 4 through 7).

First the nut 38 is removed and the upper press plate 35 is slipped off from the stalk 1 (figure 4).

Then the centering ring 30 is also slipped off from the radial stalk 1 (figure 5).

Afterwards also the lower press plate 27 is removed; in particular, as shown in figure 6, the side-by-side plates 27a, 27b defining the lower plate 27 are laterally removed, such that they do not have to pass through the hole 25 (figure 6).

Finally, also the stalk 1 can be removed (by unscrewing its end 42 via the square head 48), since its diameter and the size of the nut 45 and support ring 40 are smaller than the size of the hole 25.

Since the stalk 1 can be removed without the need of removing also the conductive plate 2 and, thus, without affecting the field windings 13, assembling and disassembling are very quick.

Naturally, in order to assemble the arrangement, the same steps can be carried out in the reverse order.

Naturally, the configuration of radial stalk and conductive plate can also be applied in case the generator has a brushless excitation.

The present invention also relates to a method for disassembling the arrangement of conductive stalk 1 and the conductive plate 2 connected each other.

The method comprises the steps of:
- first removing the blocking element 38 (i.e. the nut);
- second slipping off the upper press plate 35 from the conductive stalk 1,
- thus slipping off the centering ring 30 from the conductive stalk 1 and laterally removing the lower press plate 27;
- then removing the stalk 1 through the hole 25 of the conductive plate.

Naturally the features described may be independently provided from one another.

In practice the materials used and the dimensions can be chosen at will according to requirements and to the state of the art.

### REFERENCE NUMBERS

- 1: stalk
- 2: conductive plate
- 4: casing
- 5: stator
- 6: rotor
- 7: rotor shaft
- 8: bearings
- 9: seal ring
- 10: inside of 4
- 11: outer environment
- 13: field windings
- 15: bore of 7
- 16: conductive lead
- 19: slip rings
- 20: stalk of 19
- 21: conductive plates of 19
- 23: exciter
- 25: seat of 2
- 27: lower press plate
- 27a: plate of 27
- 27b: plate of 27
- 28: support
- 29a: recess of 27a
- 29b: recess of 27b
- 30: centering ring
- 32: hole of 30
- 35: upper press plate
- 36: seat of 35
- 38: blocking element
- 39: threaded part of 1
- 40: support ring of 28
- 41: insulating tube
- 42: end of 1
- 45: nut
- 48: square head

## Claims

1. Arrangement of a conductive stalk (1) connected to a conductive plate (2), wherein the conductive plate (2) has a seat (25) into which the stalk (1) is inserted and blocked, **characterised by** comprising:
- a lower press plate (27) resting on a support (28) having a fixed position to the stalk (1) and laterally connectable to it, the lower press plate (27) covering at least a portion of the conductive plate (2) and at least a portion of the seat (25),
- a centering ring (30) inserted into the seat (25) between the stalk (1) and the conductive plate (2),
- an upper press plate (35) covering at least a portion of the conductive plate (2) and at least a portion of the seat (25),
- a blocking element (38) tightening the connection.

2. Arrangement as claimed in claim 1, **characterised in that** the seat (25) of the conductive plate (2) is a hole.

3. Arrangement as claimed in claim 1, **characterised in that** the upper press plate (35) comprises a seat (36) housing the at least a portion of the conductive plate (2) and lower press plate (27).

4. Arrangement as claimed in claim 3, **characterised in that** the seat (36) of the upper press plate (35) is a recessed seat provided at a surface of the upper press plate (35) facing the conductive plate (2).

5. Arrangement as claimed in claim 1, **characterised in that** the lower press plate (27) comprises side-by-side plates (27a, 27b) with recesses (29a, 29b) provided at their borders for receiving the stalk (1).

6. Arrangement as claimed in claim 1, **characterised in that** the support (28) comprises a support ring (40) put on the stalk (1).

7. Arrangement as claimed in claim 6, **characterised in that** the support ring (40) rests on an insulating tube (41) put on the stalk (1).

8. Arrangement as claimed in claim 7, **characterised by** comprising a nut (45) between the support ring (40) and the lower press plate (27).

9. Arrangement as claimed in claim 1, **characterised in that** the blocking element (38) is a nut.

10. Arrangement as claimed in claim 1, **characterised in that** the stalk (1) is inserted into a rotor shaft (7) of a rotating electric machine and has an end (42) opposite the end connected to the conductive plate (2) connected to a conductive lead (16) connecting the slip rings (19) to the field windings (13) of the rotating electric machine.

11. Arrangement as claimed in claim 10, **characterised in that** the conductive plate (2) is directly connected to the field windings (13) of the rotating electric machine.

12. Method for disassembling a conductive stalk (1) and a conductive plate (2) connected each other, wherein the conductive plate (2) has a seat (25) into which the stalk (1) is inserted and blocked via:
- a lower press plate (27) resting on a support (28) having a fixed position to the stalk (1) and laterally connectable to it, the lower press plate (27) covering at least a portion of the conductive plate (2) and at least a portion of the seat (25),
- a centering ring (30) inserted into the seat (25) between the stalk (1) and the conductive plate (2),
- an upper press plate (35) covering at least a portion of the conductive plate (2) and at least a portion of the seat (25),
- a blocking element (38) tightening the connection, **characterised in that**:
- first the blocking element (38) is removed,
- second the upper press plate (35) is slipped off from the conductive stalk (1),
- thus the centering ring (30) is slipped off from the conductive stalk (1) and the lower press plate (27) is laterally removed,
- then the conductive stalk (1) is also removed through the seat (25).

13. Method as claimed in claim 12, **characterised in that** the seat (25) of the conductive plate is a hole.
